# EUROPEAN PATENT APPLICATION

(11) **EP 2 750 362 A2**
(43) Date of publication of application: **02.07.2014**
(21) Application number: 13199654.8
(22) Date of filing: 27.12.2013
(51) Int. Cl.: H04M 1/725

(54) **Apparatus and method for transmitting data in terminal**

(30) Priority: 28.12.2012 KR 20120156270
(71) Applicant: Samsung Electronics Co., Ltd, Gyeonggi-do 443-742 (KR)
(72) Inventor: Lee, Jang-Hoon, 443-742 Gyeonggi-do (KR)
(74) Representative: Nederlandsch Octrooibureau

(57) **Abstract**

Provided is an apparatus for transmitting data in a terminal, which includes a memory in which at least one data for transmission and at least one recipient are stored; and a controller for, if second data or a second recipient is added while transmitting first data to a first recipient, transmitting the second data to the first recipient or transmitting the first data to the second recipient after the ongoing transmission of the first data is completed.

## Description

### BACKGROUND OF THE INVENTION

### Field of the Invention

The present invention relates generally to an apparatus and method for transmitting data in a terminal, and more particularly, to a data transmission apparatus and method capable of transmitting by easily adding data or a recipient in a terminal.

### Description of the Related Art

Terminals may transmit data in the form of a file by attaching the file to a message or an E-mail. To achieve by executing a related application, attaching the file to the message or E-mail in the application, entering a recipient, and then transmitting the data-attached message or E-mail.

However, if additional data or file is desired to be transmitted to the same recipient later, the user needs to repeat the same operation. Likewise, if the same data or file is desired to be transmitted to another recipient, the user needs to inconveniently repeat the same operation again.

### SUMMARY OF THE INVENTION

An aspect of the present invention is to address at least the above-mentioned problems and/or disadvantages and to provide additional advantages by providing a data transmission apparatus and method capable of transmitting data or file by easily adding data/file or a new recipient in a terminal.

Another aspect of the present invention provides a data transmission apparatus and method capable of transmitting data or file by easily selecting an additional data/file or an additional recipient for transmission while the transmission of earlier data or file is ongoing in a terminal. In accordance with one aspect of the present invention, an apparatus for transmitting data in a terminal includes a memory in which at least one data and at least one recipient are stored; and a controller for, if second data or a second recipient is added while transmitting first data to a first recipient, transmitting the second data to the first recipient (or transmitting the first data to the second recipient) after completing the transmission of the first data.

In accordance with another aspect of the present invention, an apparatus for transmitting data in a terminal includes a memory in which at least one data and at least one recipient are stored; and a controller for pausing the transmission of first data if 'Add Second Data' or 'Add Second Recipient' is selected while transmitting the first data to a first recipient, resuming the transmission of the first data if the addition of the second data or the second recipient is completed, and transmitting the second data to the first recipient or the first data to the second recipient if the transmission of the first data is completed.

In accordance with yet another aspect of the present invention, an apparatus for transmitting data in a terminal includes a memory in which at least one data and at least one recipient are stored; and a controller for, if 'Transmit Additional Data' or 'Transmit Data to Additional Recipient' is selected after the transmission of first data is completed, transmitting second data to the same recipient to whom the first data has been last transmitted, or transmitting the first data to a newly selected recipient.

In accordance with yet another aspect of the present invention, a method for transmitting data in a terminal includes transmitting first data to a first recipient; if second data is added while transmitting the first data to the first recipient, transmitting the second data to the first recipient after the ongoing transmission of the first data is completed; and if a second recipient is added while transmitting the first data to the first recipient, transmitting the first data to the second recipient after the ongoing transmission of the first data is completed.

In accordance with still another aspect of the present invention, a method for transmitting data in a terminal includes transmitting first data to a first recipient; pausing the transmission of the first data if second data is added while transmitting the first data to the first recipient, resuming the transmission of the first data if the addition of the second data is completed, and transmitting the second data to the first recipient if the transmission of the first data is completed; and pausing the transmission of the first data if a second recipient is added while transmitting the first data to the first recipient, resuming the transmission of the first data if the addition of the second recipient is completed, and transmitting the first data to the second recipient if the transmission of the first data is completed.

In accordance with yet another aspect of the present invention, a method for transmitting data in a terminal includes completing transmission of data; transmitting data selected as additional data to a recipient to which the data has been last transmitted, if 'Transmit Additional Data' is selected after the transmission of data is completed; and transmitting the last transmitted data to a recipient selected as an additional recipient, if 'Transmit Data to Additional Recipient' is selected after the transmission of data is completed.

### BRIEF DESCRIPTION OF THE DRAWINGS

The above and other aspects, features and advantages of certain exemplary embodiments of the present invention will be more apparent from the following description taken in conjunction with the accompanying drawings, in which:
FIG. 1 illustrates a configuration of a terminal, to which exemplary embodiments of the present invention are applicable;
FIGs. 2A and 2B are flowcharts illustrating a process of transmitting data in a terminal according to a first embodiment of the present invention;
FIGs. 3A and 3B are flowcharts illustrating a process of transmitting data in a terminal according to a second embodiment of the present invention; and
FIG. 4 is a flowchart illustrating a process of transmitting data in a terminal according to a third embodiment of the present invention.

Throughout the drawings, the same drawing reference numerals will be understood to refer to the same elements, features and structures.

### DETAILED DESCRIPTION OF EXEMPLARY EMBODIMENTS

Preferred embodiments of the present invention will now be described in detail with reference to the accompanying drawings. In the following description, specific details such as detailed configuration and components are merely provided to assist the overall understanding of exemplary embodiments of the present invention. Therefore, it should be apparent to those skilled in the art that various changes and modifications of the embodiments described herein can be made without departing from the scope and spirit of the invention. In addition, descriptions of well-known functions and constructions are omitted for clarity and conciseness.

Terminals, to which exemplary embodiments of the present invention are applicable, may include mobile terminals and fixed terminals. The mobile terminals, easy-to-carry portable electronic devices, may include video phones, cellular phones, smart phones, International Mobile Telecommunication 2000 (IMT-2000) terminals, Wideband Code Division Multiple Access (WCDMA) terminals, Universal Mobile Telecommunication Service (UMTS) terminals, Personal Digital Assistants (PDAs), Portable Multimedia Players (PMPs), Digital Multimedia Broadcasting (DMB) terminals, E-Book readers, portable computers (for example, laptop computer, tablet computer and the like), digital cameras and the like. The fixed terminals may include desktop Personal Computers (PCs).

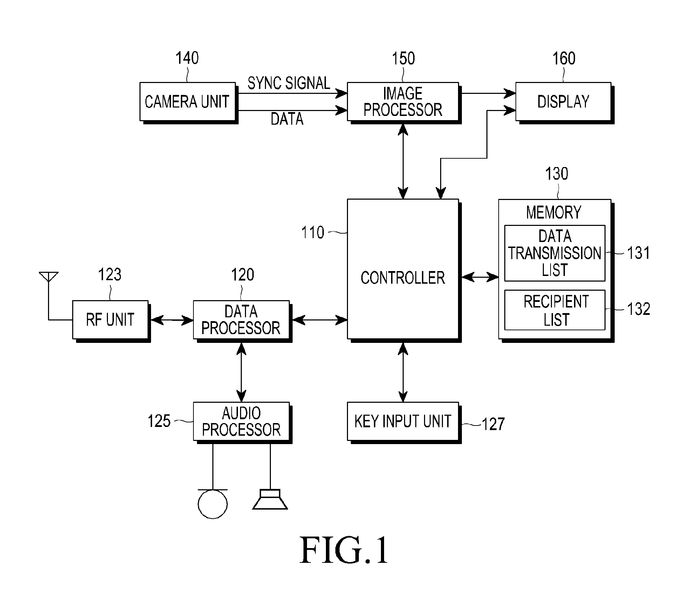

FIG. 1 illustrates a configuration of a terminal whereto the exemplary embodiments of the present invention are applicable.

Referring to FIG. 1, a Radio Frequency (RF) unit 123 is responsible for wireless communication of the terminal. The RF unit 123 includes an RF transmitter for up-converting a frequency of transmission signals and amplifying the up-converted transmission signals, and an RF receiver for Low-Noise-Amplification (LNA)-amplifying received signals and down-converting a frequency of the LNA-amplified received signals. A data processor 120 includes a transmitter for encoding and modulating the transmission signals, and a receiver for demodulating and decoding the received signals. Specifically, the data processor 120 may be comprised of a modulator/demodulator (modem) and a coder/decoder (codec). The codec includes a data codec for processing data such as packet data, and an audio codec for processing audio signals such as voice. An audio processor 125 plays received audio signals output from the audio codec in the data processor 120 using a speaker SPK and transfers transmission audio signals picked up by a microphone MIC to the audio codec in the data processor 120.

A key input unit 127 includes numeric/character input keys for entering numeric/character information, and function keys for setting various functions.

A memory 130 may include a program memory and a data memory. The program memory may store control programs for controlling the overall operation of the terminal. In accordance with exemplary embodiments of the present invention, the program memory may store programs for transmitting data by adding data or a recipient (to be specific, identification information of the recipient) during the data transmission, or transmitting the last data (or the last data transmitted to another recipient) or additional data to the last recipient (or the recipient to which the data has been last transmitted), after the data transmission. The data memory functions to temporarily store the data generated during execution of the control programs.

In accordance with exemplary embodiments of the present invention, the memory 130 includes a data transmission list 131 for storing at least one data to be transmitted, and a recipient list 132 for storing at least one recipient, to which the at least one data stored in the data transmission list 131 is to be transmitted. It should be noted that the term "data" stored in the data transmission list 131 and in the context of this invention disclosure may include text data or other file containing at least one of text, audio and video data.

A controller 110 controls the overall operation of the terminal.

In accordance with an embodiment of the present invention, if second data or a second recipient is added while transmitting first data to a first recipient, the controller 110 transmits the second data to the first recipient or the first data to the second recipient after completing transmission of the first data.

The controller 110 displays a list of other types of data if 'Add Data' is selected while transmitting the first data to the first recipient, and adds the second data in the data transmission list 131 if the second data is selected from the types of data. If the transmission of the first data to the first recipient is completed, the controller 110 transmits the second data added in the data transmission list 131, to the first recipient.

Alternatively, while transmitting the first data to the first recipient, the controller 110 pauses the transmission of the first data if 'Add Second Data' is selected, and resumes the transmission of the first data if the addition of the second data is completed.

Alternatively, while transmitting the first data to the first recipient, the controller 110 displays a list of other or potential recipients when 'Add Recipient' is selected, and adds the second recipient in the recipient list 132 if the second recipient is selected from the types of recipients. If the transmission of the first data to the first recipient is completed, the controller 110 transmits the first data to the second recipient added in the recipient list 132.

Alternatively, while transmitting the first data to the first recipient, the controller 110 pauses the transmission of the first data if 'Add Second Recipient' is selected, and resumes the transmission of the first data if the addition of the second recipient is completed.

In accordance with another embodiment of the present invention, while transmitting first data to a first recipient, the controller 110 pauses the transmission of the first data if 'Add Second Data or Second Recipient' is selected, and resumes the transmission of the first data if the addition of the second data or the second recipient is completed. If the transmission of the first data is completed, the controller 110 transmits the second data to the first recipient, or the first data to the second recipient.

Alternatively, while transmitting the first data to the first recipient, the controller 110 pauses the transmission of the first data and displays a list of other types of data, if 'Add Data' is selected. The controller 110 adds the second data in the data transmission list 131 if the second data is selected from the types of data, and resumes the transmission of the first data if the addition of the second data to the data transmission list 131 is completed. If the transmission of the first data to the first recipient is completed, the controller 110 transmits the second data added in the data transmission list 131, to the first recipient.

Alternatively, while transmitting the first data to the first recipient, the controller 110 pauses the transmission of the first data and displays types of recipients, if 'Add Recipient' is selected. The controller 110 adds the second recipient in the recipient list 132 if the second recipient is selected from a list of other recipients, and resumes the transmission of the first data if the addition of the second recipient to the recipient list 132 is completed. If the transmission of the first data to the first recipient is completed, the controller 110 transmits the first data to the second recipient added in the recipient list 132.

In accordance with yet another embodiment of the present invention, if 'Transmit Additional Data' or 'Transmit Data to Additional Recipient' is selected after transmission of data is completed, the controller 110 transmits data selected as additional data to the recipient to which the data has been last transmitted, or transmits the last transmitted data to the recipient selected as an additional recipient.

The controller 110 displays an additional transmission menu after the transmission of data is completed, and displays a list of other types of data if 'Transmit Additional Data' is selected on the additional transmission menu. If data is selected from the types of data, the controller 110 detects the recipient to which the data has been last transmitted, from the recipient list 132, and automatically transmits the selected data to the detected recipient.

In an alternate embodiment, the controller 110 displays the additional transmission menu after the transmission of data is completed, and displays types of recipients if 'Transmit Data to Additional Recipient' is selected on the additional transmission menu. If a recipient is selected from the types of recipients, the controller 110 detects the last transmitted data from the data transmission list 131, and automatically transmits the detected data to the selected recipient.

A camera unit 140 includes a camera sensor for capturing image data and converting the captured optical image signals into electrical image signals, and a signal processor for converting the analog image signals captured by the camera sensor into digital image data. The camera sensor is assumed to be a Charge-Coupled Device (CCD) or Complementary Metal-Oxide Semiconductor (CMOS) sensor, and the signal processor may be implemented with a Digital Signal Processor (DSP). The camera sensor and the signal processor may be implemented integrally or separately.

An image processor 150 performs Image Signal Processing (ISP) to display the image signals output from the camera unit 140, on a display 160. The ISP may include functions such as gamma correction, interpolation, spatial variation, image effecting, image scaling, Auto White Balance (AWB), Auto Exposure (AE), Auto Focus (AF), and the like. The image processor 150 processes the image signals output from the camera unit 140 on a frame basis, and outputs the frame image data to match with the characteristics and size of the display 160. The image processor 150, which includes a video codec, compresses the frame image data displayed on the display 160 using a predetermined video coding scheme, and decompresses the compressed frame image data into its original frame image data using the video coding scheme. The video codec may include a Joint Photographic Experts Group (JPEG) codec, a Moving Picture Experts Group 4 (MPEG4) codec, a Wavelet codec and the like. The image processor 150 is assumed to have an On-Screen Display (OSD) function. The image processor 150, under control of the controller 110, may output OSD data depending on the size of the displayed screen.

The display 160 displays, on its screen, the image signals output from the image processor 150 and the user data output from the controller 110. Liquid Crystal Display (LCD) may be used for the display 160. In this case, the display 160 may include an LCD controller, a memory for storing image data, and an LCD panel. The LCD, if configured to support a touch screen function, may serve as an input unit. In this case, the display 160 may display the keys corresponding to those of the key input unit 127.

If the display 160 is used as a touch screen unit as it is implemented to support the touch screen feature, the touch screen unit may be implemented with a Touch Screen Panel (TSP) that includes a plurality of sensor panels. The sensor panels may include a capacitive sensor panel capable of recognizing finger touches, and an electromagnetic induction sensor panel capable of sensing fine touches made by, for example, a touch pen such as a stylus pen.

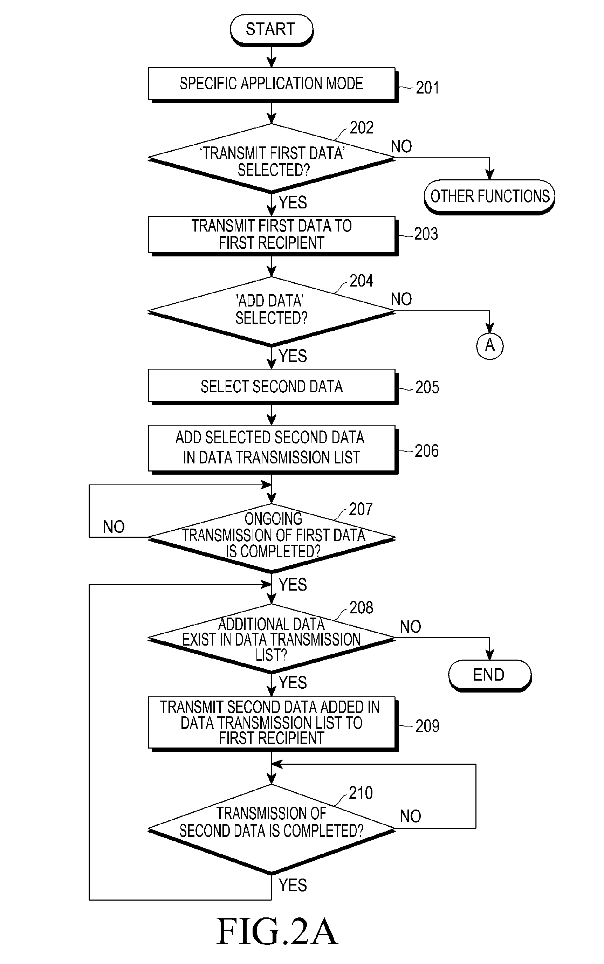

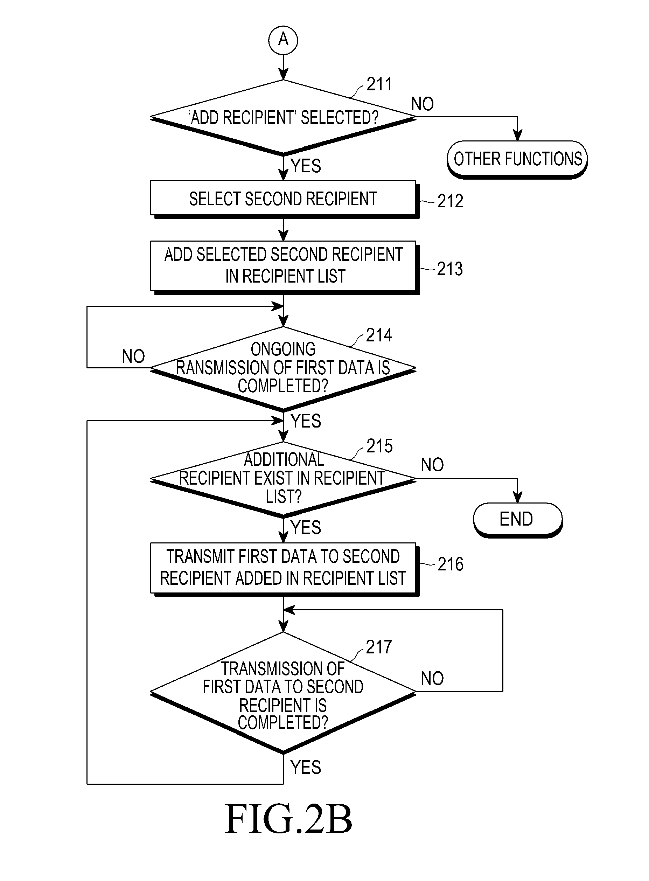

Hereinafter, operations of transmitting data according to the teachings of the present invention will be described in detail with reference to FIGs. 2 to 4.

FIGs. 2A and 2B are flowcharts illustrating a process of transmitting data in a terminal according to a first embodiment of the present invention.

Referring to FIG. 2A, in step 201, a user may select a first data among a plurality of data stored in the terminal and a first recipient among a plurality of recipients stored in the phonebook of the terminal during a specific application mode in which data transmission is available. Upon detecting the selection of transmission of the first data in step 202, the controller110 stores the first data to a data transmission list 131 and stores the first recipient to a recipient list 132 and transmits the first data stored in the data transmission list 131 to a first recipient stored in the recipient list 132, in step 203.

Thereafter, if it is determined in step 204 that 'Add Data' is selected by a user from a screen menu while transmitting the first data, the controller 110 displays a list of other types of data stored in the terminal. For example, the types of data may be displayed as file name in the list. If second data is selected from the types of data by the user in step 205, the controller 110 adds the selected second data in the data transmission list 131 in step 206. The controller displays the_data transmission list constantly in predetermined part of the display160 or displays the_data transmission list by selection of the user and.

Upon detecting storage of the second data in the data transmission list 131, the controller determins that the addition of the second data to the data transmission list 131 is completed in step 206. _ In step 207 the controller 110 determines if the ongoing transmission of the first data is completed. Upon detecting the completed transmission of the first data in step 207, the controller 110 determines if there is data added in the data transmission list 131.

Upon detecting the existence of the second data added in the data transmission list 131 in step 208, the controller 110 transmits the second data added in the data transmission list 131 to the first recipient, in step 209.

Upon detecting the completed transmission of the second data in step 210, the controller 110 determines again if there is data that is added in the data transmission list 131 for transmission, but has not been transmitted yet. Upon detecting the absence of added data in step 208, the controller 110 terminates the data transmission.

For example, if the second data is added while an E-mail, to which the first data is attached in the form of a file, is being transmitted to the first recipient, the second data is further attached to the E-mail in the form of a file, and then transmitted to the first recipient.

Meanwhile, referring to FIG. 2B, if it is determined in step 211 that 'Add Recipient' is displayed and selected while transmitting the first data (A), the controller 110 displays phone number information stored in a phonebook of the terminal as a list of potential recipients. If a second recipient is selected from the types of recipients by the user in step 212, the controller 110 adds the selected second recipient in the recipient list 132 in step 213. Note at least one recipient may be added in the recipient list 132. The recipient to be added may be selected from the potential recipients, or may be directly entered by the user.

If the addition of the second recipient to the recipient list 132 is completed, the controller 110 determines if the ongoing transmission of the first data is completed. Upon detecting the completed transmission of the first data in step 214, the controller 110 determines if there is a recipient added in the recipient list 132.

Upon detecting the existence of the second recipient added in the recipient list 132 in step 215, the controller 110 transmits the first data to the second recipient added in the recipient list 132 in step 216.

If it is determined in step 217 that the transmission of the first data to the second recipient is completed, the controller 110 determines again if there is another recipient that is added in the recipient list 132, but to whom the first data has not been transmitted. Upon detecting the absence of another recipient in step 215, the controller 110 terminates the data transmission.

For example, if the second recipient is added while an E-mail is being transmitted to the first recipient, the E-mail, to which the first data is attached, is transmitted to both the first and second recipients.

If the user desires to additionally transmit second data while transmitting the first data to the first recipient as in FIG. 2A, the controller 110 adds the second data selected by the user to the data transmission list, and when the transmission of the first data is completed, the controller 110 may easily transmit the second data added to the data transmission list to the first recipient without a plurality of general transmission processes (character input mode → selection of first recipient → attachment of second data) Alternatively, if the user desires to additionally transmit the first data to the second recipient while transmitting the first data to the first recipient as in FIG. 2B, the controller 110 adds the second recipient selected by the user to the recipient list, and when the transmission of the first data is completed, the controller 110 may easily transmit the first data to the second recipient added to the recipient list without a plurality of general transmission processes (character input mode → selection of second recipient → attachment of second data).

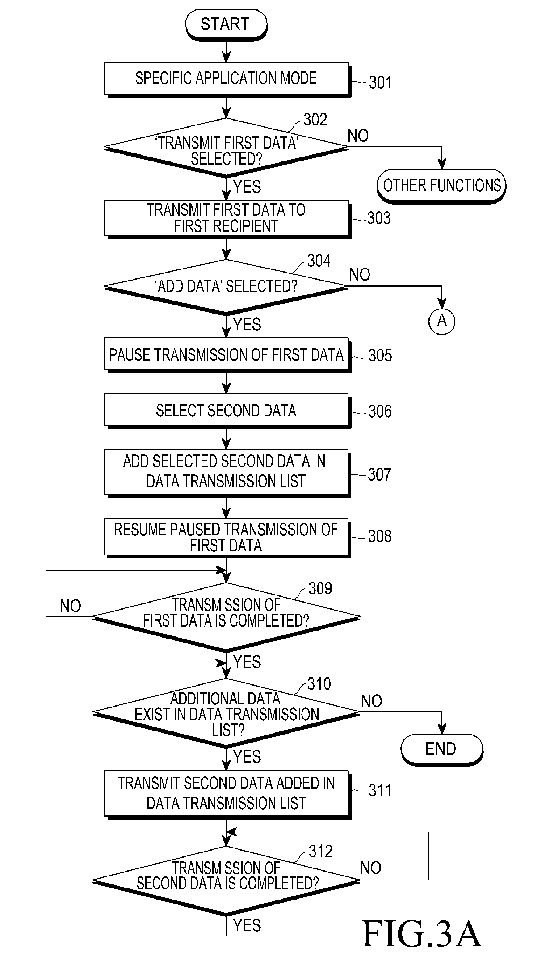

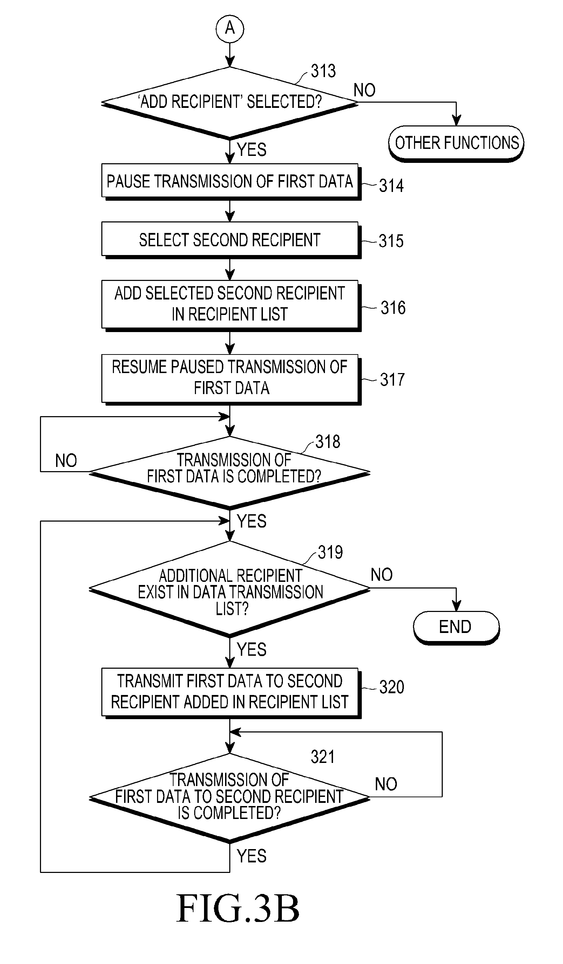

FIGs. 3A and 3B are flowcharts illustrating a process of transmitting data in a terminal according to a second embodiment of the present invention.

Referring to FIGs. 3A and 3B, in step 301,the user may select a first data among a plurality of data stored in the terminal and a first recipient among a plurality of recipients stored in the phonebook of the terminal during a specific application mode in which data transmission is available. Upon detecting the selection of transmission of the first data in step 302, the controller110 stores the first data to a data transmission list 131 and stores the first recipient to a recipient list 132 and transmits the first data stored in the data transmission list 131 to a first recipient stored in the recipient list 132, in step 303.

If it is determined in step 304 that 'Add Data' is selected while transmitting the first data, the controller 110 pauses the transmission of the first data in step 305. Here, the controller 110 may notify it to the user by displaying the pause of the transmission of the first data.

Thereafter, the controller 110 displays types of data stored in the terminal. If second data is selected from the types of data by the user in step 306, the controller 110 adds the selected second data in the data transmission list 131 in step 307. Here, at least one data may be added in the data transmission list 131.

Upon detecting storage of the second data in the data transmission list 131, the controller determines that the addition of the second data to the data transmission list 131 is completed in 307.In step308, the controller 110 resumes the transmission of the first data. The controller 110 may notify it to the user by displaying the transmission of the first data being resumed. the notification of resumed transmission is displayed using text or image etc

Subsequently, the controller 110 determines if the ongoing transmission of the first data is completed. Upon detecting the completed transmission of the first data in step 309, the controller 110 determines if there is data added in the data transmission list 131.

Upon detecting the existence of the second data added in the data transmission list 131 in step 310, the controller 110 transmits the second data added in the data transmission list 131 to the first recipient, in step 311.

Upon detecting the completed transmission of the second data in step 312, the controller 110 determines again if there is data that is added in the data transmission list 131, but has not been transmitted yet. Upon detecting the absence of added data in step 310, the controller 110 terminates the data transmission.

Meanwhile, referring to FIG. 3B, if it is determined in step 313 that 'Add Recipient' is selected while transmitting the first data, the controller 110 pauses the ongoing transmission of the first data in step 314. The controller 110 may notify the user of its pausing mode of the transmission of the first data.

Subsequently, the controller 110 displays phone number information stored in a phonebook of the terminal as potential recipients. If the second recipient is selected from the types of recipient by the user in step 315, the controller 110 adds the selected second recipient in the recipient list 132 in step 316. Here, at least one recipient may be added in the recipient list 132. The recipient to be added may be selected from the types of recipients, or may be directly entered by the user.

If the addition of the second recipient to the recipient list 132 is completed, the controller 110 resumes the paused transmission of the first data in step 317. The controller 110 may notify it to the user by displaying the resumption of the transmission of the first data.

Subsequently, the controller 110 determines if the transmission of the first data is completed. Upon detecting the completed transmission of the first data in step 318, the controller 110 determines if there is a recipient added in the recipient list 132.

Upon detecting the existence of the second recipient added in the recipient list 132 in step 319, the controller 110 transmits the first data to the second recipient added in the recipient list 132 in step 320.

If it is determined in step 321 that the transmission of the first data to the second recipient is completed, the controller 110 determines again if there is a recipient that is added in the recipient list 132, but to which the first data has not been transmitted yet. Upon detecting the absence of an added recipient in step 319, the controller 110 terminates the data transmission.

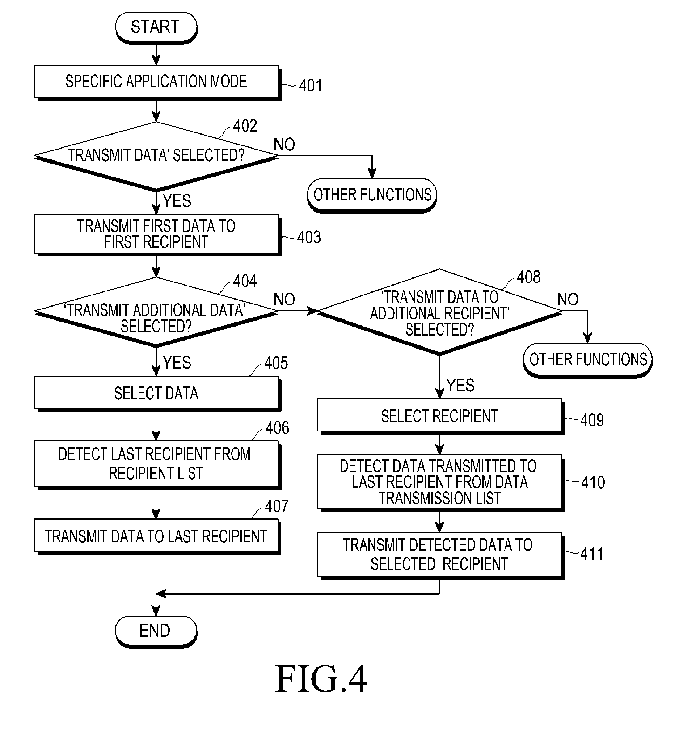

FIG. 4 is a flowchart illustrating a process of transmitting data in a terminal according to a third embodiment of the present invention.

Referring to FIG. 4, in step 401, a user may select a first data among a plurality of data stored in the terminal and a first recipient among a plurality of recipients stored in the phonebook of the terminal during a specific application mode in which data transmission is available. Upon detecting the selection of transmission of the first data in step 402, the controller110 stores the first data to a data transmission list 131 and stores the first recipient to a recipient list 132 and transmits the first data stored in the data transmission list 131 to a first recipient stored in the recipient list 132. Upon detecting the completed transmission of the first data in step 403, the controller 110 displays an additional transmission menu. If it is determined in step 404 that 'Transmit Additional Data' is selected on the additional transmission menu by the user, the controller 110 displays types of data stored in the terminal. If at least one specific data is selected from the types of data in step 405, the controller 110 detects the last recipient, to which the data has been last transmitted, from the recipient list 132 in step 406. In step 406, there may be a plurality of last recipients, but the last recipient refers to the recipient that has received the same data.

In step 407, the controller 110 automatically transmits specific data selected as additional data to the detected last recipient.

For example, if an additional transmission menu is displayed after transmission of a first text message is completed in a text message mode, and another specific data is selected as the user selects 'Transmit Additional Data' on the additional transmission menu, then the controller 110 may attach the selected specific data to a new second text message and automatically transmit it to the recipient, who is the same recipient to whom the first text message is transmitted.

If it is determined in step 408 that 'Transmit Data to Additional Recipient' is selected on the additional transmission menu by the user, the controller 110 displays phone number information stored in a phonebook of the terminal as potential recipients.

If at least one specific recipient is selected from the potential recipients in step 409, the controller 110 detects the last transmitted data from the data transmission list 131 in step 410. In step 410, there may be a plurality of last transmitted data, but the last transmitted data refers to the same data that has been transmitted to the last recipient.

In step 411, the controller 110 automatically transmits the detected last transmitted data to a new recipient selected as an additional recipient.

For example, if an additional transmission menu is displayed after transmission of a first text message is completed in a text message mode, and another recipient is selected as the user selects 'Transmit Data to Additional Recipient' on the additional transmission menu, then the controller 110 may attach the same data it has transmitted on the first text message, to a new second text message, and automatically transmit the second text message to the new recipient.

By transmitting the selected data to the first recipient or the last recipient after completing transmission of the first data to the first recipient as in FIG. 4, the controller 110 may easily transmit the additional data to the first recipient without a plurality of general transmission processes (character input mode → selection of first recipient → attachment of additional data).

Alternatively, by transmitting the first data or the last transmission data to the selected recipient after completing transmission of the first data to the first recipient, the transmission of the first data is completed and the controller 110 may easily transmit the first data to the additional recipient without a plurality of general transmission processes (character input mode → selection of additional recipient → attachment of first data).

The data transmission method proposed by the present invention may be implemented with computer-readable codes in computer-readable recording media. The computer-readable recording media may include all kinds of recording devices storing computer-readable data. Examples of the recording media may include Read Only Memories (ROMs), Random Access Memories (RAMs), optical disks, magnetic tapes, floppy disks, hard disks, and non-volatile memories, and may also include media that is implemented in the form of carrier waves (for example, transmission over the Internet). The computer-readable recording media may be distributed over the computer systems connected by the network, and the computer-readable codes may be stored and executed in a distributed manner.

As is apparent from the foregoing description, the data transmission apparatus and method proposed by the present invention makes it possible to efficiently transmit data by easily adding data or a recipient in a terminal.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. An apparatus for transmitting data in a terminal, comprising:
a memory for storing at least one data for transmission and at least one recipient; and
a controller for, if second data or a second recipient is added for transmission while transmitting first data to a first recipient, transmitting the second data to the first recipient or transmitting the first data to the second recipient after a transmission of the first data is completed.

2. The apparatus of claim 1, wherein the memory includes a data transmission list for storing the at least one data, and a recipient list for storing the at least one recipient.

3. The apparatus of claim 1, wherein the controller displays a list of other types of data when 'Add Data' is selected while transmitting the first data to the first recipient, adds the second data in a data transmission list when the second data is selected from the other types of data, and transmits the second data to the first recipient when the transmission of the first data to the first recipient is completed.

4. The apparatus of claim 1, wherein the controller displays a list of other possible recipients when 'Add Recipient' is selected while transmitting the first data to the first recipient, adds the second recipient in a recipient list when the second recipient is selected from the other possible recipients, and transmits the first data to the second recipient when the transmission of the first data to the first recipient is completed.

5. The apparatus of claim 1, further comprising:
a memory for storing at least one data for transmission and at least one recipient; and
a controller for pausing a transmission of first data to a first recipient when 'Add Second Data' or 'Add Second Recipient' is selected while the transmission is occurring, resuming the transmission of the first data to the first recipient when an addition of second data or a second recipient is completed, and transmitting the second data to the first recipient or the first data to the second recipient when the transmission of the first data is completed.

6. The apparatus of claim 5, wherein the controller displays a list of other types of data after pausing the transmission of the first data when 'Add Data' is selected while transmitting the first data to the first recipient, adds the second data in a data transmission list when the second data is selected from the other types of data, resumes the transmission of the first data to the first recipient when the addition of the second data to the data transmission list is completed, and transmits the second data to the first recipient when the transmission of the first data to the first recipient is completed.

7. The apparatus of claim 5, wherein the controller displays a list of other possible recipients after pausing the transmission of the first data when 'Add Recipient' is selected while transmitting the first data to the first recipient, adds the second recipient in a recipient list when the second recipient is selected from the list of other possible recipients, resumes the transmission of the first data to the first recipient when the addition of the second recipient to the recipient list is completed, and transmits the first data to the second recipient when the transmission of the first data to the first recipient is completed.

8. The apparatus of claim 1, further comprising:
a memory for storing at least one data for transmission and at least one recipient; and
a controller for, if 'Transmit Additional Data' or 'Transmit Data to Additional Recipient' is selected after the transmission of first data to a first recipient is completed, transmitting additional data selected to the first recipient, or transmitting the first data to a second recipient selected as an additional recipient.

9. The apparatus of claim 8, wherein the controller displays an additional transmission menu after the transmission of the first data is completed, displays a list of other types of data when 'Transmit Additional Data' is selected on the additional transmission menu, detects the first recipient to which the first data has been transmitted, from a recipient list, if another data is selected from the other types of data, and automatically transmits the selected another data to the first recipient.

10. The apparatus of claim 8, wherein the controller displays an additional transmission menu after the transmission of the first data is completed, displays a list of other possible recipients when 'Transmit Data to Additional Recipient' is selected on the additional transmission menu, detects the first data from a data transmission list when the second recipient is selected from the other possible recipients, and automatically transmits the detected first data to the second recipient.

11. A method for transmitting data in a terminal, comprising:
transmitting first data to a first recipient;
if second data is selected for transmission while transmitting the first data to the first recipient, transmitting the second data to the first recipient after the ongoing transmission of the first data is completed; and
if a second recipient is selected for transmission while transmitting the first data to the first recipient, transmitting the first data to the second recipient after the ongoing transmission of the first data is completed.

12. The method of claim 11, wherein the transmitting the second data comprises:
displaying a list of other types of data when 'Add Data' is selected while transmitting the first data to the first recipient;
adding the second data in a data transmission list, when the second data is selected from the other types of data; and
transmitting the second data to the first recipient when the transmission of the first data to the first recipient is completed.

13. The method of claim 11, wherein the transmitting the first data comprises:
displaying a list of potential recipients when 'Add Recipient' is selected while transmitting the first data to the first recipient;
adding the second recipient in a recipient list when a second recipient is selected from the list of potential recipients; and
transmitting the first data to the second recipient when the transmission of the first data to the first recipient is completed.

14. The method of claim 11, further comprising:
transmitting first data to a first recipient;
pausing the transmission of the first data when second data is added while transmitting the first data to the first recipient, resuming the transmission of the first data to the first recipient when the addition of the second data is completed, and transmitting the second data to the first recipient when the transmission of the first data is completed; and
pausing the transmission of the first data when a second recipient is added while transmitting the first data to the first recipient, resuming the transmission of the first data when the addition of the second recipient is completed, and transmitting the first data to the second recipient when the transmission of the first data is completed.

15. The method of claim 14, wherein the transmitting the second data comprises:
displaying a list of other types of data after pausing the transmission of the first data when 'Add Data' is selected while transmitting the first data to the first recipient;
adding the second data in a data transmission list when the second data is selected from the types of data;
resuming the transmission of the first data to the first recipient when the addition of the second data to the data transmission list is completed; and
transmitting the second data to the first recipient when the transmission of the first data to the first recipient is completed.

16. The method of claim 14, wherein the transmitting the first data comprises:
displaying a list of potential recipients after pausing the transmission of the first data, when 'Add Recipient' is selected while transmitting the first data to the first recipient;
adding the second recipient in a recipient list when a second recipient is selected from the types of recipients;
resuming the transmission of the first data to the first recipient when the addition of the second recipient to the recipient list is completed; and
transmitting the first data to the second recipient when the transmission of the first data to the first recipient is completed.

17. The method of claim 11, further comprising:
completing a transmission of first data to a first recipient;
transmitting second data to the first recipient when 'Transmit Additional Data' is selected after completing the transmission; and
transmitting the first data to a second recipient when 'Transmit Data to Additional Recipient' is selected after the completing the transmission.

18. The method of claim 17, wherein the transmitting the second data comprises:
displaying an additional transmission menu after the transmission of the first data;
displaying a list of other types of data when 'Transmit Additional Data' is selected from the additional transmission menu;
detecting, if the second data is selected from the other types of data, the second recipient from a recipient list; and
automatically transmitting the second data to the second recipient.

19. The method of claim 17, wherein the transmitting the first data comprises:
displaying an additional transmission menu after the transmission of the first data is completed;
displaying a list of potential recipients when 'Transmit Data to Additional Recipient' is selected on the additional transmission menu;
detecting the first data from a data transmission list when the second is selected from the list of potential recipients; and
automatically transmitting the detected first data to the second recipient.
